# DEMANDE DE BREVET EUROPEEN

(11) **EP 2 392 884 A1**
(43) Date de publication de la demande: **07.12.2011**
(21) Numéro de dépôt: 11168386.8
(22) Date de dépôt: 01.06.2011
(51) Int. Cl.: F28F 9/013, F24J 3/08

(54) **Dispositif destiné aux échanges thermiques dans une installation de géothermie**

(30) Priorité: 03.06.2010 FR 1054320
(71) Demandeur: Ledain, Thierry, 73410 Albens (FR)
(72) Inventeur: Ledain, Thierry, 73410 Albens (FR)
(74) Mandataire: Maureau, Philippe

(57) **Abrégé**

L'invention concerne un dispositif destiné aux échanges thermiques dans une installation de géothermie comprenant un tube déformable (2) formant une hélice comprenant un ensemble de spires (3) délimitant une conduite de fluide, et une pluralité de montants (4a, 4b) de maintien en position de la spirale formée par le tube (2) s'étendant selon un axe et destinés à être solidarisés aux spires (3) de façon à assurer la rigidité du dispositif. Au moins une partie des montants (4a) sont amovibles de façon à définir une première configuration d'utilisation du dispositif, dans laquelle les spires (3) du tube sont maintenues par les montants (4a, 4b) de manière à ce que le plan (P) des spires forme avec l'axe de l'hélice ou avec l'axe (A) d'un montant de maintien en position (4a, 4b) un angle (α) compris entre 70 et 110°, et une seconde configuration du dispositif, dans laquelle les spires (3) sont fixées à au moins un montant de maintien en position (4b) par rapport auquel les spires (3) sont mobiles en rotation selon un axe perpendiculaire à l'axe du montant (4b) de maintien en position et disposées de façon à ce que les plans des spires (4) forment un angle aigu avec un axe de l'hélice ou d'un axe d'un montant (4b) de maintien en position compris entre 0 et 45°.

## Description

La présente invention a pour objet un dispositif destiné aux échanges thermiques dans une installation de géothermie et une installation de géothermie comprenant un tel dispositif.

Il est connu d'utiliser un dispositif destiné aux échanges thermiques dans une installation de géothermie comprenant un tube déformable formant une hélice comprenant un ensemble de spires délimitant une conduite de fluide, et une pluralité de montant de maintien en position de la spirale formée par le tube.

Un tel dispositif est enterré de façon à réaliser un échange thermique entre un fluide passant dans la conduite et le sol entourant le tube.

Ce type de dispositif donne satisfaction en ce qu'il permet de réaliser une installation géothermique de façon efficace.

Il apparaît toutefois que la mise en oeuvre de l'installation est compliquée par l'encombrement occasionné par un tel dispositif.

La présente invention a pour objet de résoudre tout ou partie des inconvénients mentionnés ci-dessus.

A cet effet, la présente invention a pour objet un dispositif destiné aux échanges thermiques dans une installation de géothermie comprenant un tube déformable délimitant une conduite de fluide formant une hélice comprenant un ensemble de spires, et une pluralité de montants de maintien en position de la spirale formée par le tube s'étendant selon un axe et destinés à être solidarisés aux spires de façon à assurer la rigidité du dispositif, caractérisé en ce qu'au moins une partie des montants sont amovibles de façon à définir une première configuration d'utilisation du dispositif, dans laquelle les spires du tube sont maintenues par les montants de maintien en position de manière à ce que le plan des spires forme avec l'axe de l'hélice ou avec l'axe d'un montant de maintien en position un angle compris entre 70 et 110°, et une seconde configuration du dispositif, dans laquelle les spires sont fixées à au moins un montant de maintien en position par rapport auquel lesdites spires sont mobiles en rotation selon un axe perpendiculaire à l'axe du montant de maintien en position et disposées de façon à ce que les plans des spires forment un angle aigu avec un axe de l'hélice ou d'un axe d'un montant de maintien en position compris entre 0 et 45°.

Grâce aux dispositions selon l'invention, l'encombrement du dispositif, notamment lors des étapes de transports est diminué de façon très significative. Il est ainsi possible de transporter trois fois plus de dispositifs dans un même volume de transport par rapport aux dispositifs de l'art antérieur présentant un même encombrement dans la première position d'utilisation.

De préférence, l'angle formé par les plans des spires avec un axe de l'hélice ou un axe d'un montant de maintien en position dans la première configuration du dispositif est compris entre 80 et 100°.

De préférence, l'angle formé par les plans des spires avec un axe de l'hélice ou un axe d'un montant de maintien en position dans la seconde configuration du dispositif est compris entre 0 et 30°, et avantageusement entre 0 et 20°.

Avantageusement, deux montants de maintien en position sont disposés de façon diamétralement opposés dans la seconde configuration du dispositif.

Selon un mode de réalisation, les spires de l'hélice ont une forme sensiblement circulaire.

Avantageusement, un montant comporte des moyens de fixation comprenant un logement pour une portion de tube présentant une section de forme au moins partiellement complémentaire à celle du tube.

Selon un mode de réalisation, les moyens de fixation comportent une patte déformable élastiquement pour l'introduction du tube dans le logement ou la sortie du tube du logement.

Avantageusement, le dispositif comprend des montants de maintien en position amovibles formés par une partie profilée comprenant des moyens de fixation pour un ensemble de spires, et des montants de maintien en position fixes ou non-amovibles formés par une première partie profilée identique à celle des montants de maintien en position amovibles et une seconde partie profilée comprenant des moyens de blocage du tube dans les logements des moyens de fixation de la première partie profilée.

La présente invention a également pour objet une installation de géothermie comprenant un dispositif tel que décrit ci-dessus.

La présente invention sera mieux comprise à la lecture de la description détaillée ci-dessous, en référence aux figures ci-annexées.
La figure 1 est une vue en perspective d'un dispositif selon l'invention dans la première configuration d'utilisation.
La figure 2 est une vue en perspective d'un dispositif selon l'invention dans la seconde configuration d'utilisation.
La figure 3 est une vue de détail d'un montant de maintien en position montrant les moyens de fixation d'un montant de maintien en position.
La figure 4 est une vue de détail d'un second montant de maintien en position en éclaté.
La figure 5 est une vue schématique du dispositif dans la configuration de la figure 1.
La figure 6 est une vue schématique du dispositif dans la configuration de la figure 2.

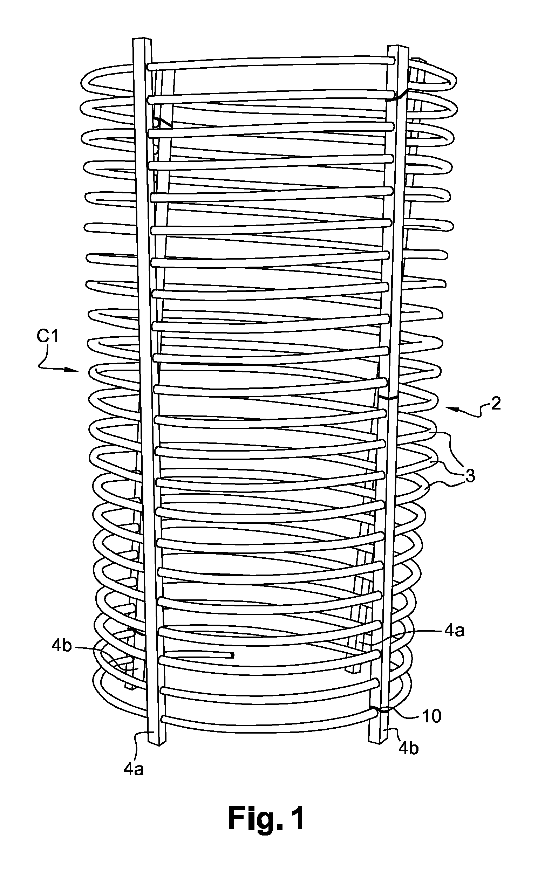

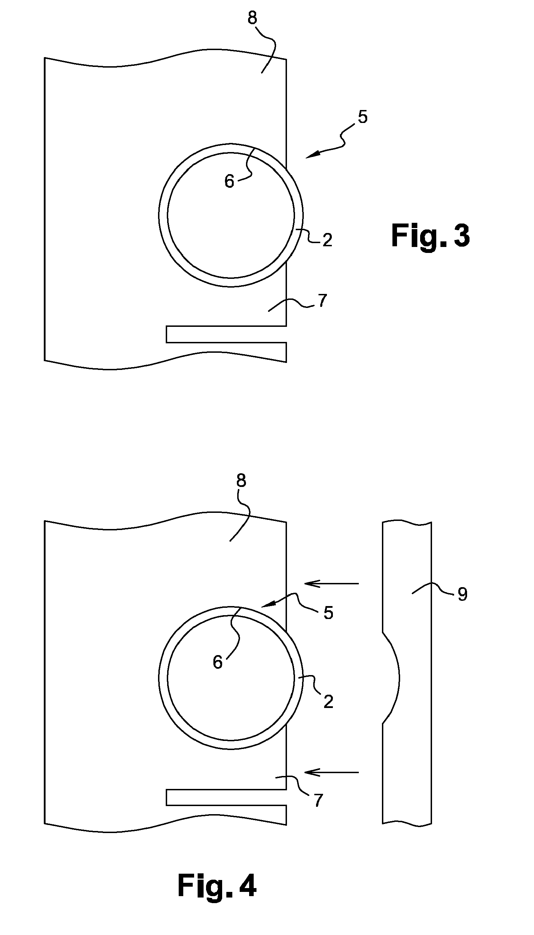

Selon un mode de réalisation représenté sur les figures 1 à 3, un dispositif ou corbeille destiné aux échanges thermiques dans une installation de géothermie comprend un tube déformable 2 enroulé de façon à former une hélice comprenant un ensemble de spires 3, par exemple de forme circulaire, délimitant une conduite de fluide.

Le dispositif comprend en outre une pluralité de montants 4 de maintien en position de la spirale formée par le tube 2 destinés à être solidarisé aux spires 3 de façon à assurer la rigidité de la corbeille.

En particulier, un ensemble de quatre montants 4 peut être prévu.

Le dispositif présente deux configurations d'utilisation.

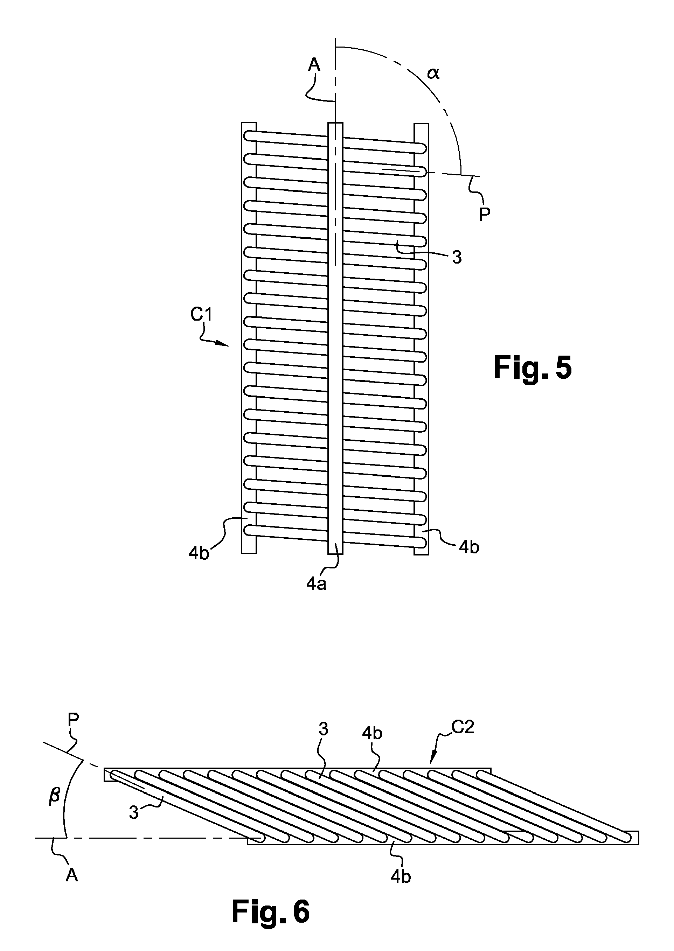

Selon une première configuration C1 d'utilisation du dispositif représenté sur les figures 1 et 5, les spires 3 du tube sont maintenues par les montants 4 de façon à ce qu'elles soient disposées de façon sensiblement coaxiale, ce qui revient à dire également que le plan P des spires forme avec l'axe de l'hélice ou avec l'axe A d'un montant de maintien en position un angle a voisin de 90°, par exemple compris entre 70 et 110° et de préférence compris entre 80 et 100°.

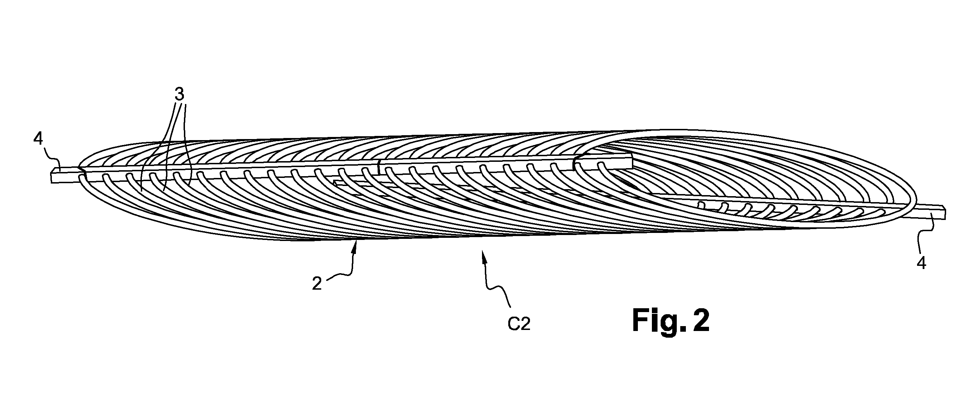

Selon une seconde configuration C2 du dispositif représentée sur les figure 2 et 6, les spires 3 sont disposées de façon à ce que les plans des spires forment un angle aigu β avec l'axe de l'hélice ou l'axe des montants fixes ou non amovible de maintien en position compris entre 0 et 45° et de préférence entre 0 et 30°, avantageusement inférieur à 20° comme cela est représenté sur la figure 6.

Afin de passer de la première à la seconde configuration du système, une partie des montants 4a sont amovibles. En particulier, deux montants 4a sont amovibles, et deux montant 4b restent en position sur le tube 2, disposés de façon diamétralement opposés par rapport aux spires 3. Une fois que les montants amovibles 4a sont détachés du tube 2, les spires sont inclinées pour atteindre la seconde position d'utilisation.

Grâce aux dispositions ci-dessus, le volume occupé par les corbeilles lors de leur transport est sensiblement diminué.

Les montants amovibles 4a sont avantageusement réalisés sous forme de profilé.

De préférence, ces montants 4a comportent des moyens de fixation 5 comprenant un logement 6 pour une portion de tube 2 et une patte 7 déformable élastiquement.

Il est à noter qu'il est possible d'utiliser un ensemble de profilés identiques 8 pour les montants 4a destinés à être détachés du tube et pour les montants 4b restant attachés au tube. Ces profilés comprennent de préférence une section avec deux branches comprenant des moyens de fixation 5.

La forme des logements 6, complémentaire de celle du tube 2 permet une rotation du tube 2 par rapport au logement selon un axe perpendiculaire à celui du montant 4a.

Dans le cas des montants 4b destinés à rester en position sur le tube 2 dans la seconde configuration d'utilisation, il est possible de solidariser sur le profilé 8 un second profilé 9 destiné à refermer le logement 6 par une partie de logement 12 et à bloquer le tube dans ce logement.

Les moyens de solidarisation peuvent être par exemple constitués par des colliers de serrage 10.

Le dispositif est destiné à être intégré dans une installation de géothermie.

Bien que l'invention ait été décrite en liaison avec des exemples particuliers de réalisation, il est bien évident qu'elle n'y est nullement limitée et qu'elle comprend tous les équivalents techniques des moyens décrits ainsi que leurs combinaisons si celles-ci entrent dans le cadre de l'invention.

## Revendications

1. Dispositif destiné aux échanges thermiques dans une installation de géothermie comprenant :
un tube déformable (2) délimitant une conduite de fluide formant une hélice comprenant un ensemble de spires (3), et
une pluralité de montants (4a, 4b) de maintien en position de la spirale formée par le tube (2) s'étendant selon un axe et destinés à être solidarisés aux spires (3) de façon à assurer la rigidité du dispositif,
**caractérisé en ce que**
au moins une partie des montants (4a) sont amovibles de façon à définir :
- une première configuration (C1) d'utilisation du dispositif, dans laquelle les spires (3) du tube sont maintenues par les montants (4a, 4b) de manière à ce que les plans (P) des spires forment avec l'axe de l'hélice ou avec l'axe (A) d'un montant de maintien en position (4a, 4b) un angle (α) compris entre 70 et 110°, et
- une seconde configuration (C2) du dispositif, dans laquelle les spires (3) sont fixées à au moins un montant de maintien en position (4b) par rapport auquel les spires (3) sont mobiles en rotation selon un axe perpendiculaire à l'axe du montant (4b) de maintien en position et disposées de façon à ce que les plans (P) des spires (4) forment un angle aigu (β) avec un axe de l'hélice ou un axe (A) d'un montant (4b) de maintien en position compris entre 0 et 45°.

2. Dispositif selon la revendication 1, dans lequel deux montants (4b) de maintien en position sont disposés de façon diamétralement opposés dans la seconde configuration (C2) du dispositif.

3. Dispositif selon l'une des revendications précédentes, dans lequel l'angle formé par les plans (P) des spires (4) avec un axe de l'hélice ou un axe (A) d'un montant (4b) de maintien en position dans la première configuration (C1) du dispositif est compris entre 80 et 100°.

4. Dispositif selon l'une des revendications précédentes, dans lequel l'angle formé par les plans (P) des spires (4) avec un axe de l'hélice ou un axe (A) d'un montant (4b) de maintien en position dans la seconde configuration (C2) du dispositif est compris entre 0 et 30°.

5. Dispositif selon l'une des revendications précédentes, dans lequel les spires (3) de l'hélice ont une forme sensiblement circulaire.

6. Dispositif selon l'une des revendications précédentes, dans lequel un montant comporte des moyens de fixation (5) comprenant un logement (6) pour une portion de tube présentant une section de forme au moins partiellement complémentaire à celle du tube (2).

7. Dispositif selon la revendication 6, dans lequel les moyens de fixation (5) comportent une patte déformable élastiquement (7) pour l'introduction du tube (2) dans le logement (6) ou la sortie du tube du logement (6).

8. Dispositif selon l'une des revendications 6 et 7, comprenant :
- des montants de maintien en position amovibles (4a) formés par une partie profilée comprenant des moyens de fixation (5) pour un ensemble de spires, et
- des montants de maintien en position fixes (4b) formés par une première partie profilée identique à celle des montants de maintien en position amovibles (4a) et une seconde partie profilée comprenant des moyens de blocage du tube dans les logements (6) des moyens de fixation (5) de la première partie profilée.

9. Installation de géothermie comprenant un dispositif selon l'une des revendications précédentes.
